# EUROPÄISCHE PATENTSCHRIFT

(11) **EP 1 526 993 B1**
(45) Veröffentlichungstag und Bekanntmachung des Hinweises auf die Patenterteilung: **09.01.2008**
(21) Anmeldenummer: 03790789.6
(22) Anmeldetag: 08.07.2003
(51) Int. Cl.: B60T 8/00

(54) **VERFAHREN ZUM FÜHREN EINES MEHRSPURIGEN FAHRZEUGS AUF EINER KURVENBAHN**
METHOD FOR GUIDING A MULTITRACK VEHICLE ON A CURVED PATH
PROCEDE POUR GUIDER UN VEHICULE MULTIVOIES DANS UNE COURBE

(30) Priorität: 09.08.2002 DE 10236734
(43) Veröffentlichungstag der Anmeldung: 04.05.2005
(73) Patentinhaber: Bayerische Motoren Werke Aktiengesellschaft, 80809 München (DE)
(72) Erfinder: OREND, Ralf, 91126 Schwabach (DE); SMAKMAN, Hendrikus, 80636 München (DE)
(86) Internationale Anmeldenummer: PCT/EP2003/007309
(87) Internationale Veröffentlichungsnummer: WO 2004/020262

(56) Entgegenhaltungen:
- EP-A- 0 473 112
- DE-A- 10 102 002
- US-A- 6 056 371
- US-A- 6 131 688

## Beschreibung

Die Erfindung betrifft ein Verfahren zum Führen eines mehrspurigen Fahrzeugs auf einer Kurvenbahn, die vom Fahrzeug-Fahrer über einen Vorgabe-Lenkwinkel oder dgl. vorgegeben wird, wobei ein diese gewünschte Kurvenbahn repräsentierendes Kurvenbahn-Signal in einer durch eine elektronische Steuereinheit geeignet überarbeiteten Form an zumindest einen die Gierbewegung des Fahrzeugs beeinflussenden Aktuator geleitet wird und das aus dem Vorgabe-Lenkwinkel und der Fahrzeug-Geschwindigkeit gebildete und insbesondere die Gierrate darstellende Kurvenbahn-Signal im Sinne einer Vorsteuerung nicht nur zur geeigneten Ansteuerung eines Lenk-Aktuators, mit dem ein Lenkeinschlagwinkel zumindest eines lenkbaren Fahrzeug-Rades eingestellt werden kann, sondern auch zur geeigneten Veränderung der Längskraft an den Rädern zumindest einer Fahrzeugseite herangezogen werden kann, so dass neben oder anstelle der Einstellung eines Lenkeinschlagwinkels zusätzlich oder alleinig an zumindest ein Fahrzeug-Rad eine Längskraft angelegt werden kann, um die gewünschte Kurvenbahn zu befahren. Zum bekannten Stand der Technik wird neben der DE 198 12 238 A1 und der DE 197 51 125 A1 insbesondere auf die US 6,131,688 verwiesen.

In der Entwicklung bzw. teilweise bereits in Serie befinden sich sog. aktive Lenksysteme für Kraftfahrzeuge, die in der Lage sind, neben dem vom Fahrer über das Lenkrad (oder allg. eine sog. Lenkhandhabe) vorgegebenen Lenkwinkel aktiv einen zusätzlichen Lenkeinschlagwinkel an den lenkbaren Fahrzeug-Rädern (hierbei handelt es sich üblicherweise um die Vorderräder) darzustellen, wodurch eine zusätzliche Seitenkraft an der Fzg.-Vorderachse und folglich ein gewünschtes Giermoment erzeugt werden kann. Damit sind solche Systeme in der Lage, die Fahrdynamik eines Kraftfahrzeugs erheblich zu beeinflussen. Bei derartigen aktiven Lenksystemen kann es sich bspw. um ein sog. steer-by-wire-System handeln, oder um eine dem Fachmann ebenfalls bekannte Überlagerungslenkung, mit welcher dem sog. Vorgabe-Lenkwinkel des Fahrers auf mechanischem Wege ein Zusatzlenkwinkel hinzugefügt wird, so dass ein sich hieraus ergebender Summen-Lenkeinschlagwinkel am lenkbaren Fzg.-Rad eingestellt wird.

Mit einem sog. aktiven Lenksystem ist es möglich, Maßnahmen umzusetzen, mit Hilfe derer sich aufgrund der Möglichkeit aktiver Lenkeingriffe spürbare Verbesserungen des Fzg.-Fahrverhaltens erreichen lassen. Besonders erstrebenswert sind dabei solche Maßnahmen oder Verfahren, mit denen sich das dynamische Lenkansprechverhalten verbessern lässt, indem ein grundsätzlich vorhandener Phasenverzug in der Übertragung zwischen der Lenkvorgabe des Fahrers (bspw. am Lenkrad) und der daraus folgenden Gierreaktion des Fahrzeugs reduziert werden kann.

Eine Möglichkeit hierfür bildet das Prinzip der sog. Vorhaltelenkung, die bspw. in der eingangs zweitgenannten DE 197 51 125 A1 erwähnt ist, und bei der es sich um einen gesteuerten Lenkeingriff handelt, bei dem ein erzeugter Zusatz-Lenkeinschlagwinkel proportional zur Lenkrad-Drehgeschwindigkeit, also zum zeitlich differenzierten Vorgabe-Lenkwinkel des Fahrers, ist. Konkret kann der gemessene Vorgabe-Lenkwinkel durch ein einfaches PD-Vorhalteglied gefiltert und gemäß einer vorgegeben Lenkübersetzung zusätzlich an den lenkbaren Rädern eingestellt werden. Das Vorhalten des Lenkradwinkels durch das PD-Vorhalteglied bewirkt dabei einen kleineren Phasenverzug in der Übertragung zwischen der Lenkvorgabe am Lenkrad und der Gierreaktion des Fahrzeugs und sorgt auf diese Weise für ein schnelleres Ansprechen der Fahrzeugbewegung auf eine Lenkvorgabe des Fahrers.

Ein weiteres mögliches Verfahren zur Verbesserung des Lenkansprechverhaltens an Kraftfahrzeugen besteht in einer sog. modellbasierten Vorsteuerung der Gierrate. Dabei wird aus dem Vorgabe-Lenkwinkel, aus der Fzg.-Fahrgeschwindigkeit und einem Fzg.-Referenzmodell zunächst eine sog. Referenzgierrate und daraus mittels eines inversen Fahrzeugmodells ein entsprechender Lenkeinschlagwinkel für die lenkbaren Räder bestimmt und dann an diesen geeignet eingestellt. Bei guter Übereinstimmung zwischen dem zu Grunde gelegten Fahrzeugmodell und dem realen Fahrzeug sorgt der so berechnete Lenkeinschlagwinkel für die gewünschte Gierbewegung des Fahrzeugs, d.h. die tatsächliche Gierrate stimmt mit der sog. Referenzgierrate überein. Durch entsprechende Wahl des Referenzmodells lässt sich auf diese Weise die Übertragung zwischen der Lenkvorgabe am Lenkrad und der Gierreaktion des Fahrzeugs gezielt einstellen und insbesondere eine Verbesserung des Lenkansprechverhaltens erreichen.

Die beiden soweit kurz beschriebenen bekannten Verfahren bilden eine sog. Vorsteuerung und benötigen dabei neben dem Vorgabe-Lenkwinkel, d.h. dem vom Fahrer vorgegebenen Lenkradwinkel und der aktuellen Fzg.-Fahrgeschwindigkeit keine weiteren Informationen über die momentane Fahrzeugbewegung. Insofern besteht ein erheblicher Unterschied zwischen einer derartigen Vorsteuerung und einem bekannten Regelverfahren, wie es bspw. in der eingangs erstgenannten DE 198 12 238 A1 beschrieben ist. Bei diesem oder ähnlichen bekannten Regelverfahren wird aus der feststellbaren Differenz zwischen dem Istwert der Gierrate und einem geeignet bestimmten Gierraten-Sollwert eine Regelabweichung abgeleitet, die dann im Sinne einer Minimierung bspw. zwei unabhängig voneinander arbeitenden Reglern zugeführt werden kann, nämlich einem Lenkregler und einem Bremsregler. Anders als bei einer Vorsteuerung wird also bei den letztgenannten Regelverfahren die tatsächliche Gierrate des Fahrzeugs gemessen und an eine Sollgierrate angepasst, wobei diese Soll-Gierrate sowohl durch Eingriffe in das Fzg.-Lenksystem als auch durch Eingriffe in das Fzg.-Bremssystem eingehalten werden kann. Damit, d.h. durch zusätzliches Lenken oder Bremsen kann somit auf eine auf irgendwelche Einflüsse zurückzuführende Abweichung zwischen der tatsächlich befahrenen Kurvenbahn und der gewünschten Kurvenbahn reagiert werden.

Die vorliegende Erfindung betrifft nun kein Regelverfahren, bei dem ein Soll-Ist-Vergleich (bspw. hinsichtlich der Gierrate) durchgeführt wird, sondern sie betrifft - ähnlich wie die genannte Vorhaltelenkung - ein Verfahren zur Vorsteuerung allein aus den beiden grundlegenden Eingangsgrößen, nämlich dem sog. "Vorgabe-Lenkwinkel" und der "Fzg.-Geschwindigkeit", wobei es Ziel der vorliegenden Erfindung ist, ein Verfahren mit deutlich größeren Freiheiten als bei der bekannten Vorhaltelenkung gegeben, aufzuzeigen. Bspw. bestehen nämlich bei der bekannten Vorhaltelenkung durch die Lenk-Aktuatorik bestimmte Systemgrenzen, bspw. hinsichtlich der Bandbreite oder der Stellgeschwindigkeit.

Weiteren relevanten Stand der Technik bildet die eingangs letztgenannte US 6,131,688, in der ein zweiachsiges zweispuriges Fahrzeug mit üblicher Vorrad-Lenkung und zusätzlich lenkbaren Hinterrädern beschrieben ist, bei dem zum Erreichen einer vom Fahrer gewünschten Kurvenbahn zusätzlich eine geeignete Veränderung der Längskraft an den Rädern zumindest einer Fahrzeugseite durchgeführt werden kann. Neben der Einstellung eines Lenkeinschlagwinkels an den lenkbaren Hinterrädern kann demnach zusätzlich an zumindest ein Fahrzeug-Rad eine Längskraft angelegt werden, um eine gewünschte Kurvenbahn zu befahren. Bei diesem bekannten Stand der Technik ist im übrigen der an den lenkbaren Vorderrädern einstellbare Rad-Lenkwinkel nicht veränderbar, d.h. dieser wird mechanisch exakt entsprechend der Vorgabe des Fahrzeug-Fahrers eingestellt. Ein Vorteil dieser sog. Allrad-Lenkung, mit welcher neben der üblichen Vorrad-Lenkung auch eine Lenkbarkeit der Fahrzeug-Hinterräder gegeben ist, liegt bei höheren Fahrgeschwindigkeiten in einem Gewinn an Fahrstabilität, wenn die Hinterräder (selbstverständlich nur mit einem kleinen Winkel) gleichsinnig zu den Vorderrädern eingeschlagen werden. Der daraus resultierende Nachteil eines vergrößerten Kurvenradius wird nach dieser Schrift mit einem gezielten einseitigen Bremseingriff (allgemein durch einseitiges Anlegen einer Längskraft) kompensiert. Im übrigen könnte mit einem zum Lenkeinschlag der Vorderräder gegensinnigen Lenkeinschlag der Hinterräder zwar die Kurvenwilligkeit des Fahrzeugs erhöht werden, jedoch stellen sich hiermit schnell unsichere Fahrzustände insbesondere bei höheren Fahrgeschwindigkeiten ein. Der wesentliche Nachteil einer Allrad-Lenkung ist jedoch die Komplexität eine solchen Systems.

Mit der vorliegenden Erfindung soll daher aufgezeigt werden, wie die Agilität eines Fahrzeugs bei Kurvenfahrt unter Zuhilfenahme einer geeigneten Veränderung der Rad-Längskräfte an zumindest einer Fahrzeug-Seite gesteigert werden kann, ohne hierfür eine aufwändige Allrad-Lenkung zu benötigen, d.h. Aufgabe der Erfindung ist es, ein diesbezüglich verbessertes Verfahren nach dem Oberbegriff des unabhängigen Patentanspruchs aufzuzeigen.

Diese Aufgabe wird durch die kennzeichnenden Merkmale dieses Anspruchs gelöst; eine vorteilhafte Weiterbildung ist Inhalt des Unteranspruchs.

Wenn das die gewünschte Kurvenbahn repräsentierende Kurvenbahn-Signal in einer durch eine elektronische Steuereinheit geeignet überarbeiteten Form an einen den Lenkeinschlagwinkel zumindest eines lenkbaren Fahrzeug-Rades beeinflussenden Lenk-Aktuator geleitet wird, so kann das aus dem Vorgabe-Lenkwinkel und der Fahrzeug-Geschwindigkeit gebildete und insbesondere die Gierrate darstellende Kurvenbahn-Signal im Sinne einer Vorsteuerung nicht nur zur geeigneten Ansteuerung des Lenk-Aktuators, sondern auch zur geeigneten Veränderung der Längskraft an den Rädern zumindest einer Fahrzeugseite herangezogen werden, so dass neben oder anstelle der Einstellung eines Lenkeinschlagwinkels zusätzlich oder alleinig an zumindest ein Fahrzeug-Rad eine Längskraft angelegt werden kanne, um die gewünschte Kurvenbahn zu befahren.

Bevorzugt wird dabei die besagte Längskraft durch Anlegen einer Bremskraft an das oder die Räder einer Fahrzeugseite erzeugt, es ist jedoch auch möglich, einseitig eine Antriebskraft wirken zu lassen oder beide genannten Längskräfte miteinander zu kombinieren, derart dass die Räder auf der einen Fzg.-Seite abgebremst und auf der anderen Fzg.-Seite beschleunigt werden. Der Einfachheit halber wird dabei im weiteren das Anlegen einer Längskraft mit dem Aufbringen einer Bremskraft gleichgesetzt, d.h. auch wenn im weiteren nur von einer Bremskraft bezüglich eines Fzg.-Rades gesprochen wird, so kann anstelle derer auch eine geeignet große Antriebskraft an ein Fzg.-Rad auf der gegenüberliegenden Fzg.-Seite angelegt werden, um ein hieraus resultierendes vergleichbares Giermoment zu erzielen.

Erfindungsgemäß wird ein Vorsteuerverfahren vorgeschlagen, das eine Verbesserung des Fahrverhaltens bzw. einer Gierbewegung des Fahrzeugs bevorzugt mittels integrierter bzw. allgemein kombinierter Lenkeingriffe und Bremseingriffe ermöglicht. Durch das gezielte Abbremsen einzelner Räder kann ein zusätzliches Giermoment auf das Fahrzeug aufgebracht werden, das einen Lenkvorgang unterstützt. Auf diese Weise lassen sich dann auch bei Erreichen der Systemgrenzen bspw. der Lenkaktuatorik weitere Verbesserungen des Lenkansprechverhaltens erzielen. Vorgeschlagen wird somit ein Verfahren zur Verbesserung des Fahrverhaltens, wahlweise mit Lenkeingriff oder mit Bremseingriff oder mit kombiniertem Lenkeingriff und Bremseingriff, bei welchem es sich um eine reine Gierratenvorsteuerung handelt, die als Eingangssignale nur den Lenkradwinkel (oder dgl.) und die Fahrgeschwindigkeit des Fahrzeugs benötigt. Grundsätzlich kann eine beliebige Aufteilung der Stelleingriffe auf das Lenksystem und auf das Bremssystem des Fahrzeugs erfolgen, d.h. es kann ein erster Giermoment-Anteil durch den Lenkeinschlagwinkel der lenkbaren Fzg-Räder erzielt werden und zweiter Giermoment-Anteil durch das Anlegen einer Längskraft in Form einer Bremskraft (und/oder einer Antriebskraft) erzeugt werden. Diese beiden Giermoment-Anteile in Summe ergeben dann dasjenige Giermoment, das zum erfolgreichen und agilen Befahren der gewünschten Kurvenbahn erforderlich ist, zumindest dann, wenn keine nennenswerten Störeinflüsse vorliegen. Dieses letztgenannte aus der Summe der beiden Giermoment-Anteile gebildete Giermoment wird im weiteren als Aktuator-Giermoment, das geeignet aufzubringen ist, bezeichnet, und kann im Sinne einer Vorsteuerung bei Fehlen von Störeinflüssen allein aus dem Vorgabe-Lenkwinkel und der aktuellen Fzg.-Fahrgeschwindigkeit bestimmt werden.

Hier wird nun jedoch vorgeschlagen, dass sich der durch die Einstellung eines Lenkeinschlagwinkels erzeugte Giermoment-Anteil aus einer Tiefpassfilterung des zum Befahren der gewünschten Kurvenbahn insgesamt aufzubringenden Aktuator-Giermoments ergibt. Eine derartige Tiefpassfilterung ergibt ein besonders agiles fahrdynamisches Verhalten, da dann die "schnellen" Anteile aus der Wunsch-Gierrate durch nahezu verzögerungsfrei wirkende Bremseingriffe umgesetzt werden können, während die "langsameren" Anteile über den Lenkeinschlagwinkel der lenkbaren Fzg.-Räder realisiert werden. Dies hat den Vorteil, dass die jeweiligen Bremseingriffe auch nur sehr kurz dauern und somit zu keiner nennenswerten Verzögerung des Fahrzeugs führen. Das Ansprechverhalten auf einen Lenkwunsch des Fahrers ist dann jedoch - wie gewünscht - sehr schnell.

Die Bestimmung des für das erfolgreiche Befahren der gewünschten Kurvenbahn aufzubringenden sog. Aktutator-Giermomentes kann dabei bspw. bzw. bevorzugt mittels eines linearen Einspurmodells erfolgen, wobei die aktuelle, aus dem eingestellten Lenkeinschlagwinkel resultierende Seitenkraft des oder der lenkbaren Rades/Räder zurückgeführt werden sollte, um das sog. Reaktionsmoment des Fahrzeugs mitberücksichtigen zu können. Bekanntermaßen ergibt sich aus der gewünschten Gierrate, die - wie bereits erwähnt wurde - nur aus dem Vorgabe-Lenkwinkel und der Fzg.-Fahrgeschwindigkeit bestimmt wird, unter Berücksichtigung der Gierträgheit des Fahrzeugs und dem Reaktionsmoment desselben das oben genannte Aktuator-Giermoment, das nun mittels eines oder mehrerer Aktuatoren an das Fahrzeug angelegt werden muss, damit sich dieses mit der gewünschten Gierrate bewegt.

Ausdrücklich sei darauf hingewiesen, dass als sogenanntes die gewünschte Kurvenbahn repräsentierendes Kurvenbahn-Signal anstelle der Gierrate auch der sog. Schwimmwinkel oder die Querbeschleunigung des Fahrzeugs herangezogen werden kann. Bekanntermaßen gilt bei einer Fzg.-Fortbewegung ohne nennenswerte Störeinflüsse der Zusammenhang a_{y}=v°(β+Ψ̇), wenn mit ay die Querbeschleunigung, mit v die Fahrgeschwindigkeit des Fzg.'s, mit β der Schwimmwinkel und mit Ψ̇ die Gierrate bezeichnet wird.

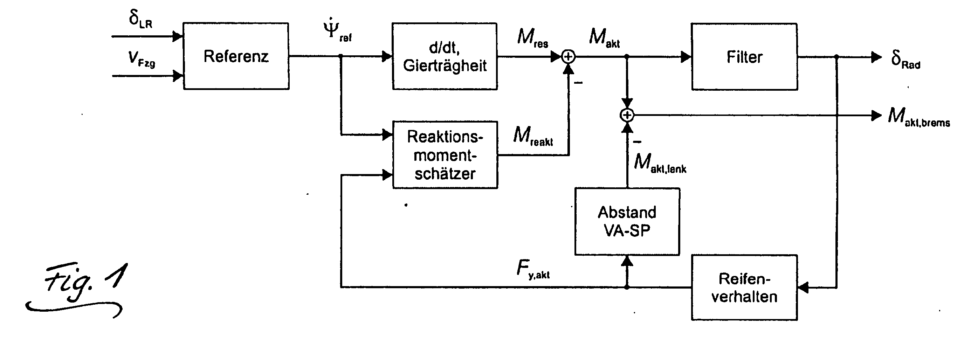

Im folgenden wird die Erfindung anhand eines beigefügten Blockschaltbildes (Fig.1), das ein bevorzugtes Ausführungsbeispiel darstellt, nochmals weiter erläutert, wobei das weiter oben erläuterte sog. Aktuator-Giermoment einer Tiefpass-Filterung unterworfen wird um hieraus den durch die Einstellung eines Lenkeinschlagwinkels zu erzeugenden Giermoment-Anteil zu ermitteln. Dieses Blockschaltbild stellt den Berechnungsablauf in einer geeigneten elektronischen Steuereinheit dar, wobei die folgenden Symbole für die folgenden auch erläuterten Kenngrößen stehen:

Mit δ_{LR} ist der sog. Vorgabe-Lenkwinkel bezeichnet, d.h. der Lenkwunsch des Fahrers, den dieser insbesondere an einem Lenkrad einstellen kann.

Mit v_{Fzg} ist die Fahrzeug-Geschwindigkeit, d.h. die aktuelle Fahr- oder Längsgeschwindigkeit des Fahrzeugs bezeichnet.

Über eine sog. "Referenz", bevorzugt ein geeignetes Referenzmodell ergibt sich dabei aus dem Vorgabe-Lenkwinkel (δ_{LR} und der Fahrzeug-Geschwindigkeit v_{Fzg} ein die gewünschte Kurvenbahn repräsentierendes Kurvenbahnsignal.

Mit Ψ̇_{ref} ist die quasi vorgegebene Gierrate des Fahrzeugs bezeichnet, die sich als sog. die gewünschte Kurvenbahn repräsentierendes Kurvenbahn-Signal aus dem Vorgabe-Lenkwinkel δ_{LR} des Fahrers und der aktuellen Fahrgeschwindigkeit v_{Fzg} des Fahrzeugs ergibt.

Mit Mᵣₑₛ ist ein sog. resultierendes Giermoment bezeichnet, das vorliegen muss, damit sich das Fahrzeug mit der Gierrate Ψ̇_{ref} bewegt. Dieses resultierende Giermoment Mᵣₑₛ ergibt sich dabei über den Drehimpulssatz aus dem Gier-Trägheitsmoment des Fahrzeugs (in der Figur mit dem zeitlichen Differential "d/dt Gierträgheit" bezeichnet).

Mit Mᵣₑₐₖₜ ist das sog. Reaktionsmoment des Fahrzeugs bezeichnet, das u.a. aus der vorgegebenen Gierrate Ψ̇_{ref} in einem Reaktionsmoment-Schätzer bestimmt werden kann, und das aus einer Kurvenfahrt des Fahrzeugs resultiert, bei der die lenkbaren Räder nicht eingeschlagen sind und bei der keine zusätzliche Längskraft auf die Räder einwirkt, d.h. dass die Fzg.-Räder nicht abgebremst oder beschleunigt werden.

Mit Mₐₖₜ ist das sog. Aktuator-Giermoment bezeichnet, das mittels geeigneter Aktuatoren auf das Fahrzeug aufgebracht werden muss, damit auf das Fahrzeug die Gierrate Ψ̇_{ref} einwirkt. Bekanntermaßen ist dieses Aktuator-Giermoment Mₐₖₜ die Differenz zwischen dem resultierenden Giermoment Mᵣₑₛ und dem Reaktionsmoment Mᵣₑₐₖₜ.

Mit δ_{Rad} ist der Lenkeinschlagwinkel eines lenkbaren Fahrzeugrades bezeichnet. Dieser Lenkeinschlagwinkel δ_{Rad} verursacht einen (ersten) Giermoment-Anteil M_{akt,lenk} , der über das Reifenverhalten sowie über den Abstand zwischen der Fahrzeug-Vorderachse (VA), die die lenkbaren Fzg.-Räder trägt, und den Fahrzeug-Schwerpunkt (SP) in einem direkten Zusammenhang mit dem Lenkeinschlagwinkel δ_{Rad} steht.

Neben dem ersten Giermoment-Anteil M_{akt,lenk} liegt erfindungsgemärß ein weiterer (zweiter) Giermoment-Anteil M_{akt,brems} vor, der durch Anlegen einer Längskraft, insbesondere einer Bremskraft, an zumindest ein Rad einer Fahrzeugseite erzeugbar ist.

Erfindungsgemäß wird nun das anzulegende Aktuator-Giermoment Mₐₖₜ in einen durch einen Lenkeinschlagwinkel δ_{Rad} erzeugbaren Giermoment-Anteil M_{akt,lenk} und einen durch das Anlegen einer Längskraft in Form einer Bremskraft und/oder einer Antriebskraft erzeugbaren Giermoment-Anteil M_{akt,brems} quasi aufgeteilt. Konkret bilden die beiden Giermoment-Anteile M_{akt,lenk} und M_{akt,brems} in Summe das gesamte Aktuator-Giermoment Mₐₖₜ.

Mit F_{y,akt} ist die durch den Lenkeinschlag der lenkbaren Fzg.-Räder erzeugte Seitenkraft bezeichnet, die über das Reifenverhalten direkt mit dem Lenkeinschlagwinkel δ_{Rad} zusammenhängt.

Beim Ausführungsbeispiel wird lediglich eine Gierrate Ψ̇_{ref} als das eine gewünschte Kurvenbahn repräsentierende Kurvenbahn-Signal vorgegeben und es wird nun das wie geschildert ermittelbare Aktuator-Giermoment Mₐₖₜ über ein Filter, und zwar über ein Tiefpassfilter geleitet, woraus direkt der Lenkeinschlagwinkel δ_{Rad} gewonnen werden kann. Dieser Lenkeinschlagwinkel δ_{Rad} wird durch einen geeigneten Aktuator eingestellt, wobei dieser Aktuator entweder Bestandteil eines steer-by-wire-Systems oder Bestandteil einer Überlagerungslenkung sein kann, wie dies eingangs bereits beschrieben wurde.

Aus diesem Lenkeinschlagwinkel δ_{Rad} lässt sich wie erläutert die hierdurch erzeugte Giermoment-Anteil M_{akt,lenk} bestimmen, so sich hieraus direkt der weitere, durch Anlegen einer Längskraft zu erzeugende Giermoment-Anteil M_{akt,bremse} ergibt. Dieser wird dann mittels eines geeigneten Aktuators umgesetzt, d.h. bevorzugt werden die Radbremsen des Fahrzeugs einseitig geeignet betätigt.

Im übrigen ist die durch den Lenkeinschlagwinkel δ_{Rad} verursachte Seitenkraft F_{y,akt} im genannten Reaktionsmomentschätzer zu berücksichtigen.

Der wesentliche Vorteil des vorgestellten Verfahrens einer sog. GierratenVorsteuerung mit integriertem bzw. kombinierten Lenkeingriff und Bremseingriff ist der, dass sich gegenüber einer Vorsteuerung mit alleinigem Lenkeingriff das Lenkansprechverhalten durch zusätzliche Bremseingriffe an einzelnen Rädern wesentlich verbessern lässt. Ein weiterer Vorteil liegt in der Möglichkeit einer beliebigen Aufteilung der aktiven Stelleingriffe auf das Lenksystem und das Bremssystem des Fahrzeugs. Durch diesen quasi zusätzlichen Freiheitsgrad ist es beispielsweise möglich, sehr leicht eine sog. "steer-by-brake-Funktionalität" zu realisieren, bei der durch reine Bremseingriffe an einzelnen Rädern eine gewünschte Gierbewegung des Fahrzeugs eingestellt werden kann. Eine derartige "steer-by-brake-Funktionalität" ermöglicht es vorteilhafterweise, die Lenkbarkeit des Fahrzeugs z.B. im Falle eines kompletten Ausfalls der Lenkaktuatorik zu bewahren, wobei noch darauf hingewiesen sei, dass durchaus eine Vielzahl von Details auch abweichend von obigen Ausführungen gestaltet sein kann, ohne den Inhalt der Patentansprüche zu verlassen.

## Patentansprüche

1. Verfahren zum Führen eines mehrspurigen Fahrzeugs auf einer Kurvenbahn, die vom Fahrzeug-Fahrer über einen Vorgabe-Lenkwinkel (δ_{LR}) oder dgl. vorgegeben wird, wobei ein diese gewünschte Kurvenbahn repräsentierendes Kurvenbahn-Signal in einer durch eine elektronische Steuereinheit geeignet überarbeiteten Form an zumindest einen die Gierbewegung des Fahrzeugs beeinflussenden Aktuator geleitet wird und das aus dem Vorgabe-Lenkwinkel (δ_{LR}) und der Fahrzeug-Geschwindigkeit (v_{Fzg}) gebildete und insbesondere die Gierrate (Ψ̇) darstellende Kurvenbahn-Signal im Sinne einer Vorsteuerung nicht nur zur geeigneten Ansteuerung eines Lenk-Aktuators, mit dem ein Lenkeinschlagwinkel (δ_{Rad}) zumindest eines lenkbaren Fahrzeug-Rades eingestellt werden kann, sondern auch zur geeigneten Veränderung der Längskraft an den Rädern zumindest einer Fahrzeugseite herangezogen werden kann, so dass neben oder anstelle der Einstellung eines Lenkeinschlagwinkels (δ_{Rad}) zusätzlich oder alleinig an zumindest ein Fahrzeug-Rad eine Längskraft angelegt werden kann, um die gewünschte Kurvenbahn zu befahren,
**dadurch gekennzeichnet, dass** sich der durch die Einstellung eines Lenkeinschlagwinkels (δ_{Rad}) erzeugte Giermoment-Anteil (M_{akt,lenk}) aus einer Tiefpassfilterung des aufzubringenden Aktutator-Giermoments (Mₐₖₜ) ergibt, wobei die Summe des durch den Lenkeinschlagwinkel (δ_{Rad}) erzeugbaren Giermoment-Anteils (M_{akt,lenk}) und des durch das Anlegen einer Längskraft in Form einer Bremskraft und/oder einer Antriebskraft erzeugbaren Giermoment-Anteils (M_{akt,brems}) das zum Befahren der gewünschten Kurvenbahn aufzubringende Aktuator-Giermoment (Mₐₖₜ) ist.

2. Verfahren nach Anspruch 1,
**dadurch gekennzeichnet, dass** das für das erfolgreiche Befahren der gewünschten Kurvenbahn aufzubringende Aktutator-Giermoment (Mₐₖₜ) aus einem linearen Einspurmodell ermittelt wird, in das die aktuelle, aus dem eingestellten Lenkeinschlagwinkel (δ_{Rad}) resultierende Seitenkraft (F_{y,akt}) des oder der lenkbaren Rades/Räder rückgeführt wird.

## Claims

1. A method for guiding a multitrack vehicle on a curved path which is defined by the vehicle driver by way of a set steering angle (δ_{LR}) or the like, wherein a curved path signal representing this desired curved path is conducted in a form appropriately revised by an electronic control unit to at least one actuator influencing the yawing motion of the vehicle, and the curved path signal formed from the set steering angle (δ_{LR}) and the vehicle speed (vᵥₑₕ) and representing, more especially, the yaw rate (ψ) can be used as a pilot control not only for appropriate activation of a steering actuator with which a steering lock angle (δ_{wheel}) of at least one steerable vehicle wheel can be set but also for appropriately changing the longitudinal force at the wheels of at least one vehicle side, so that, in addition to or instead of the setting of a steering lock angle (δ_{wheel}), in addition or by itself, a longitudinal force can be applied to at least one vehicle wheel in order to travel the desired curved path, **characterised in that** the yawing moment fraction (M_{act,steer}) produced by the setting of a steering lock angle (δ_{wheel}) is obtained from a lowpass filtering of the actuator yawing moment (M_{act}) to be applied, the sum of the yawing moment fraction (M_{act,steer}), which can be produced by the steering lock angle (δ_{wheel}), and the yawing moment fraction (M_{act,brake}), which can produced by the application of a longitudinal force in the form of a braking force and/or a driving force, being the actuator yawing moment (M_{act}) to be applied for the travelling of the desired curved path.

2. A method according to claim 1, **characterised in that** the actuator yawing moment (M_{act}) to be applied for successful travelling of the desired curved path is determined from a linear single-track model into which the current side force (Fy,act), resulting from the set steering lock angle (δ_{wheel}), of the steerable wheel(s) is returned.

## Revendications

1. Procédé de guidage d'un véhicule à traces multiples, sur une trajectoire courbe prédéfinie par le conducteur du véhicule par un angle de direction de consigne δ_{LR} ou un moyen analogue,
selon lequel
on transmet un signal de trajectoire courbe représentant la trajectoire courbe souhaitée sous une forme traitée de manière appropriée par une unité de commande électronique à au moins un actionneur influençant le mouvement de lacet du véhicule, et le signal de trajectoire courbe formé à partir de l'angle de direction de consigne δ_{LR} et de la vitesse du véhicule v_{fzG} et représentant notamment la vitesse de lacet ψ, est utilisé non seulement pour la commande appropriée d'un actionneur de direction qui règle au moins une roue directrice du véhicule par un angle de braquage de direction δ_{rad}, mais également pour modifier de manière appropriée la force longitudinale appliquée aux roues d'au moins un côté du véhicule, de façon qu'à côté ou à la place du réglage d'un angle de braquage de direction δ_{rad} on applique en plus ou uniquement une force longitudinale à au moins une roue du véhicule pour suivre la trajectoire courbe souhaitée,
**caractérisé en ce que**
la composante de couple de lacet M_{akt,lenk} générée par le réglage d'un angle de braquage de direction δ_{rad} résulte du filtrage passe-bas du couple de lacet d'actionneur à appliquer Mₐₖₜ, et la somme de la composante de couple de lacet M_{akt,lenk} générée à partir de l'angle de braquage de direction δ_{rad}, et de la composante de couple de lacet M_{akt,brems} générée par l'application d'une force longitudinale sous la forme d'une force de freinage et/ou d'une force d'entraînement, est le couple de lacet d'actionneur Mₐₖₜ qu'il faut appliquer pour parcourir la trajectoire courbe souhaitée.

2. Procédé de guidage d'un véhicule à voies multiples selon la revendication 1,
**caractérisé en ce que**
le couple de lacet d'actionneur Mₐₖₜ qu'il faut appliquer pour réussir à suivre la trajectoire courbe souhaitée se détermine à partir d'un modèle linéaire à une voie auquel on retourne la force latérale F_{y,akt} actuelle résultant de l'angle de braquage de direction réglé δ_{rad} du ou des roues directrices.
